# EUROPÄISCHE PATENTSCHRIFT

(11) **EP 3 687 722 B1**
(45) Veröffentlichungstag und Bekanntmachung des Hinweises auf die Patenterteilung: **30.04.2025**
(21) Anmeldenummer: 18779617.2
(22) Anmeldetag: 25.09.2018
(51) Int. Cl.: B23B 49/00, B23B 51/00, B23B 51/10

(54) **SENKER MIT TIEFENSTOP**
COUNTERSINK WITH BIT GAUGE
FORET ALÉSEUR MUNI D'UNE BUTÉE DE PROFONDEUR

(30) Priorität: 29.09.2017 DE 102017122795
(43) Veröffentlichungstag der Anmeldung: 05.08.2020
(73) Patentinhaber: wolfcraft GmbH, 56746 Kempenich (DE)
(72) Erfinder: EBERT, Winfried, 56745 Weibern (DE)
(74) Vertreter: Grundmann, Dirk
(86) Internationale Anmeldenummer: PCT/EP2018/075859
(87) Internationale Veröffentlichungsnummer: WO 2019/063504

(56) Entgegenhaltungen:
- EP-A1- 0 483 703
- WO-A1-87/00100
- DE-A1- 102005 017 872
- DE-A1- 102008 022 968
- DE-A1- 19 511 346
- DE-A1- 19 753 574
- DE-A1- 2 120 320
- DE-C- 684 609
- DE-C- 737 134
- DE-C- 879 191
- DE-U- 7 207 706
- GB-A- 191 125 372

## Beschreibung

### Gebiet der Technik

Die Erfindung betrifft ein Werkzeug mit einem um eine Drehachse antreibbaren Schaft und einem damit verbundenen drehend arbeitenden Werkzeugkopf, der einen sich über einen Axialabstand erstreckenden Arbeitsabschnitt aufweist, wobei ein am Schaft in verschiedenen Axialstellungen mittels eines radial verlagerbaren Fesselungselementes festlegbarer Tiefenbegrenzer eine in den Axialstellungen im Arbeitsabschnitt liegende Anschlagfläche aufweist.

### Stand der Technik

Aus der DE 879 191 C ist ein Spannkopf für einen Spiralbohrer bekannt, bei dem Rastkugeln in Rastausnehmungen des Spiralbohrers eingreifen sollen. Die Rastausnehmungen verlaufen auf einer wendelgangförmigen Linie, auf der auch die die beiden benachbarten Spankanäle trennenden Rippe verläuft.

Die WO 87/00100 beschreibt einen als Futter ausgebildeten Senker, der drei auf einer Wendelganglinie verlaufende Gewindebohrungen aufweist, in die wahlweise eine Befestigungsschraube einschraubbar ist, die sich auf einer zwei Spankanäle trennenden Rippe eines Spiralbohrers abstützen kann.

Aus der DE 10 2008 022 968 A1 beziehungsweise EP 2 093 001 A1 ist ein Senker bekannt, bei dem auf einem kreiszylinderförmigen Abschnitt eines Schaftes ein Tiefenbegrenzer angeordnet ist. Mit einem Fesselungselement in Form einer Madenschraube kann der Tiefenbegrenzer in verschiedenen Axialstellungen am Schaft befestigt werden. Eine Anschlagfläche des Tiefenbegrenzers kann somit an einer x-beliebigen Stelle im Arbeitsabschnitt positioniert werden, so dass mit der Axialposition der Durchmesser der mit dem als Senker ausgebildeten Werkzeugkopf gefertigten Senkung festlegbar ist.

Aus der DE 72 07 706 U ist ein Senker bekannt mit einem als Hülse ausgebildeten Tiefenbegrenzer. Der Schaft besitzt ein Außengewinde, auf das die Hülse aufgeschraubt ist, so dass durch Variation der Drehstellung der Hülse der Durchmesser der Senkung eingestellt werden kann.

Die DE 737 134 beschreibt ein Bohrwerkzeug mit einem Tiefenanschlag, wobei zur Axialeinstellung die Spitze einer Madenschraube in die Gewindegänge eines Trapezgewindes eingreifen.

Die DE 10 2005 017 872 A1 beschreibt einen Bithalter mit einer Anschlaghülse. Die Anschlaghülse besitzt einen Schrägschlitz mit Ausnehmungen. Aus dem Schaft ragt ein Fesselungsstift, der in den Schlitz eingreift. Durch Drehverstellen der Hülse lässt sich die Einschraubtiefe des in eine Aufnahmeöffnung eingesteckten Bits einstellen.

Die WO 87/00100 A1 beschreibt einen an einem Schaft eines Bohrers befestigbaren Senker, wobei Madenschrauben in ein oder mehrere, auf einer Wendelganglinie angeordnete Gewindebohrungen eingedreht werden können, damit die Spitzen der Madenschrauben gegen Zylindermantelflächen treten können.

### Zusammenfassung der Erfindung

Der Erfindung liegt die Aufgabe zugrunde, das gattungsgemäße Werkzeug gebrauchsvorteilhaft weiterzubilden.

Zunächst und im Wesentlichen wird vorgeschlagen, dass ein Zylinderabschnitt des Schaftes eine Vielzahl von auf einer Wendelganglinie angeordnete Positionieraussparungen aufweist. Die Positionieraussparungen können Bohrungen mit einem gerundeten Grund sein. Es können aber auch Bohrungen mit einem trichterförmig zulaufenden konischen Grund sein. Die Bohrungen können aber auch einen flachen Grund aufweisen. Die Positionieraussparungen können einen kreisrunden Öffnungsrand besitzen. Der Öffnungsrand kann aber auch von der Kreisform abweichen. Die Positionieraussparungen besitzen einen axialen Abstand, der etwa einem Millimeter entspricht. Der Durchmesser der Öffnungen der Bohrung kann größer als 1 mm sein. Es ist aber auch vorgesehen, dass der axiale Abstand der Positionieraussparungen größer oder kleiner als 1 mm ist. Der axiale Abstand der Zentren der Positionieraussparungen kann dabei geringer sein als der Durchmesser der Positionieraussparungen oder geringer sein als der halbe Durchmesser der Positionieraussparungen. Der axiale Abstand der Zentren unmittelbar benachbart liegender Positionieraussparungen ist größer als der axiale Abstand und insbesondere größer als der anderthalbfache Durchmesser der Positionieraussparungen. Das Fesselungselement besitzt eine Spitze, die wahlweise in eine der mehreren Positionieraussparungen eingreifen kann, wobei sich die Spitze bevorzugt an einem gerundeten oder spitz zulaufenden Boden selbst zentrierend abstützt. Die Spitze kann somit eine Rundung sein oder von einem Kegel oder Kegelstumpf ausgebildet sein. In einer bevorzugten Ausgestaltung ist das Fesselungselement eine Madenschraube, die in Radialrichtung in eine Gewindebohrung eines Fesselungskörpers eingedreht ist. Um die axiale Position des Tiefenbegrenzers zu ändern, muss zunächst das Fesselungselement gelöst werden und anschließend der Tiefenbegrenzer axial und in Umfangsrichtung versetzt werden. Hierzu ist es von Vorteil, wenn der Tiefenbegrenzer eine Hülse ist. Bei gelöstem Fesselungselement ist der Tiefenbegrenzer bevorzugt sowohl in Axialrichtung, als auch in Umfangsrichtung frei verschieblich gegenüber dem Zylinderabschnitt. Durch die Hülse erstreckt sich der Werkzeugkopf, der eine Schneidkante aufweisen kann oder der von einem Schraubwerkzeugkopf gebildet sein kann. In einer bevorzugten Weiterbildung der Erfindung ist vorgesehen, dass jede Positionieraussparung mit einer ihr zugeordneten Markierung versehen ist. Eine derartige Markierung wird von einem Zeichen, insbesondere einem Sichtzeichen, beispielsweise einer aufgedruckten oder eingeprägten Ziffer ausgebildet. Diese Ziffer kann den Wert einer axialen Lage in Millimetern oder einer anderen Einheit repräsentieren. In einer bevorzugten Ausgestaltung der Erfindung ist das Werkzeug ein Senker. Der Werkzeugkopf ist ein Schneidkopf, der eine Schneide aufweist. Die Schneide erstreckt sich schräg zur Drehachse. Sie besitzt somit eine sowohl radiale, als auch axiale Richtungskomponente. Mit der Eintauchtiefe des Schneidkopfes verändert sich die Öffnungsweite der erzeugten Senkung. Das auf dem Schaft aufgedruckte oder in den Schaft eingeprägte Zeichen kann einen Wert, beispielsweise in Millimetern für den Durchmesser der Öffnungsweite der erzeugten Senkung angeben. Die Schneide des Senkers dreht sich bei einem um die Drehachse angetriebenen Schaft auf einer Kegelmantelfläche oder einer Kegelstupfmantelfläche. Bevorzugt besitzt der Werkzeugabschnitt eine Spitze. Der Werkzeugkopf kann aber auch als Bithalter, Bohrer, Schälbohrer, Stufenbohrer oder Lochfräser ausgebildet sein. Das Fesselungselement kann nicht nur eine Madenschraube sein. Es kann auch eine Schraube mit Kopf sein oder ein anderweitig, beispielsweise gegen die einer Rückstellfeder radial verlagerbarer Stift mit Spitze. Die Form der Spitze kann der Form der Positionieraussparung entsprechen, so dass bspw. ein gerundete Spitze an der konischen Fläche der Positionieraussparung oder ein kegelförmiger oder kegelstumpfförmiger Spitzenabschnitt des Fesselungselementes an einem konischen Abschnitt der Positionieraussparung flächig anliegt. Als Alternative dazu ist vorgesehen, dass ein Abschnitt der Spitze des Fesselungselementes den Boden der Positionieraussparung ringförmig berührt. Beispielsweise kann der Boden der Positionieraussparung konisch gestaltet und die Spitze des Fesselungselementes rund gestaltet sein. Der Tiefenbegrenzer kann einen Fesselungskörper aufweisen, in dem das Fesselungselement angeordnet ist. An diesem Fesselungskörper kann ein Hülsenabschnitt befestigt sein, der die Anschlagfläche aufweist und der sich gegenüber dem Fesselungskörper verdrehen kann. Der Fesselungskörper kann aus Kunststoff gefertigt sein und Axialstege aufweisen, zwischen denen sich Fenster befinden. Die Anschlagfläche kann eine ringsum geschlossene Ringfläche sein. Es ist ferner von Vorteil, wenn der Zylinderabschnitt einen Magneten aufweist, der auf der axialen Höhe der Positionieraussparungen angeordnet ist. Der Fesselungskörper, der Träger des Fesselungselementes ist, oder das Fesselungselement selbst können aus einem ferromagnetischen Material gefertigt sein, so dass der bevorzugt frei über den Zylinderabschnitt verlagerbare Fesselungskörper durch die Kraft des Magneten in dem Bereich, in dem sich die Positionieraussparung befindet, gehalten wird. Der Fesselungskörper wird als Folge eines dem Zylinderabschnitt zugeordneten Magneten schwimmend auf den Axialbereich vorpositioniert, in welchem Axialbereich sich die Positionieraussparungen befinden. Er wird elastisch rückstellbar in einer Neutralstellung gehalten, aus der er in beiden Axialrichtungen verschoben werden kann. Aus einer verschobenen Stellung kann der Fesselungskörper durch Magnetkraft zurück in die Neutralstellung schwingen.

### Kurze Beschreibung der Zeichnungen

Ausführungsbeispiele der Erfindung werden nachfolgend anhand beigefügter Zeichnungen erläutert. Es zeigen:
- Fig. 1: eine Explosionsdarstellung eines erfindungsgemäßen Senkers,
- Fig. 2: den Senker mit im Schnitt dargestelltem Tiefenbegrenzer,
- Fig. 3: vergrößert den Ausschnitt III-III in Fig. 2,
- Fig. 4: eine Schnittdarstellung eines zweiten Ausführungsbeispiels,
- Fig. 5: das zweite Ausführungsbeispiel geschnitten in einer perspektivischen Darstellung,
- Fig. 6: ein drittes Ausführungsbeispiel in einer Schnittdarstellung,
- Fig. 7: das dritte Ausführungsbeispiel in einer perspektivischen Darstellung,
- Fig. 8: ein viertes Ausführungsbeispiel in einer Schnittdarstellung,
- Fig. 9: das vierte Ausführungsbeispiel in einer perspektivischen Schnittdarstellung,
- Fig. 10: ein fünftes Ausführungsbeispiel in einer geschnittenen Darstellung, und
- Fig. 11: das fünfte Ausführungsbeispiel in einer geschnittenen perspektivischen Darstellung.

### Beschreibung der Ausführungsformen

Die in den Zeichnungen dargestellten Ausführungsbeispiele sind Senker bzw. Schälbohrer oder Stufenbohrer. Die Werkzeuge bestehen im Wesentlichen aus zwei bzw. drei Teilen. Ein Schaft 1 besitzt eine längliche Gestalt. Ein erstes Ende des Schaftes 1 bildet einen Antriebsabschnitt 2 aus mit einem Mehrkantquerschnitt aus, der in ein Futter eines Antriebswerkzeuges eingesteckt werden kann, um den Schaft 1 um die Drehachse A drehanzutreiben.

Der Antriebsschaft 2 setzt sich fort in einem Zylinderabschnitt 7. Auf der dem Antriebsschaft 2 gegenüberliegenden Seite schließt sich an den Zylinderabschnitt 7 ein Werkzeugkopf 3 an. Der Werkzeugkopf 3 kann materialeinheitlich mit dem Antriebsschaft 2 verbunden sein. Er kann aber auch ein gesondertes Teil sein, das mit dem Antriebsschaft 2 steckverbunden ist. Beispielsweise kann der Werkzeugkopf 3 von einem Schraubwerkzeugprofil eines Bits ausgebildet sein, der in eine Einstecköffnung des Antriebsschaftes 2 bzw. des Zylinderabschnittes 7 eingesteckt ist.

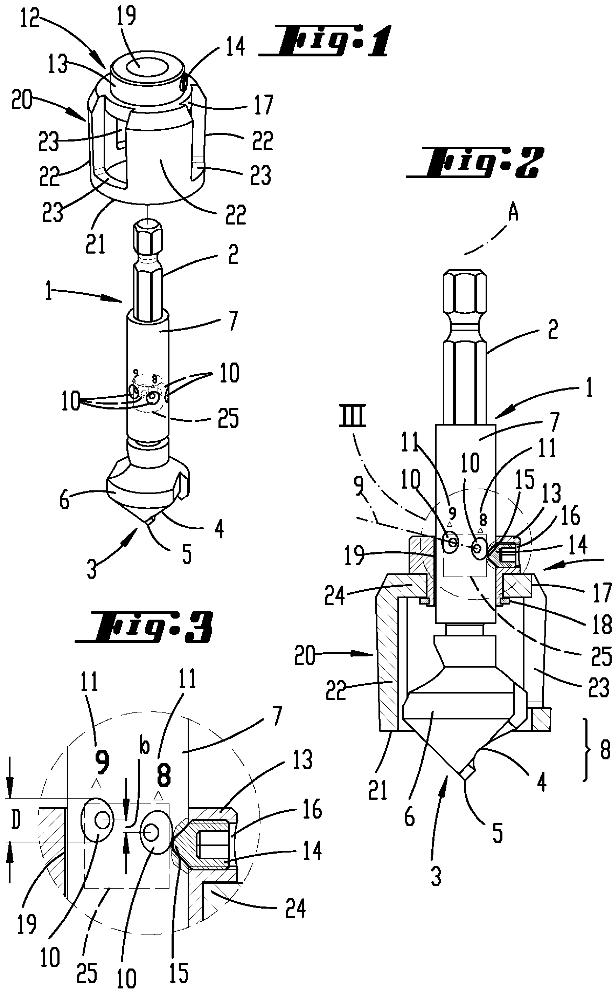

Beim dem in den Figuren 1 - 3 dargestellten ersten Ausführungsbeispiel ist der Werkzeugkopf 3 ein Senkkopf mit einer Schneidkante 4, die sich im Ausführungsbeispiel 45° schräg zur Achse A erstreckt. Die Schneidkante 4 verläuft auf einer Geraden und beschreibt somit bei einer Drehbewegung des Werkzeugkopfes 3 um die Drehachse 4 eine auf einer Kegelfläche liegende Bewegung. Der Winkel, mit dem sich die Schneidkante 4 zur Achse A erstreckt, kann aber auch einen anderen Wert besitzen. Beim Ausführungsbeispiel besitzt der Werkzeugkopf 3 eine Zylindermantelfläche mit einem Fenster. Das Fenster ist die Öffnung eines diagonal durch den Werkzeugkopf 3 hindurchgehenden Abfuhrkanals. Die Schneidkante 4 wird von einer bogenförmigen Randkante ausgebildet, an der die Spanabfuhröffnung an die Kegelfläche des Werkzeugkopfes 3 angrenzt. Die Schneidkante 4 liegt beim Ausführungsbeispiel somit in einer kegelförmigen Spitzenfläche des Werkzeugkopfes 3. Die Spitzenfläche erstreckt sich von der Spitze 5 bis zu einem durchmessergrößten Abschnitt 6 des Werkzeugkopfes 3, der sich auf einer Zylindermantelfläche bzw. einer leicht hinterschnittenen Zylindermantelfläche erstreckt.

Ein weiteres Teil des Werkzeuges ist ein Tiefenbegrenzer 12, der im Ausführungsbeispiel wiederum zweiteilig ausgebildet ist. Ein ringförmiger Fesselungskörper 13 besitzt eine Ringöffnung, durch die der Zylinderabschnitt 7 hindurchragt. An einen scheibenförmigen Abschnitt des Fesselungskörpers 13 schließt sich ein Hals 17 an, der eine Ringaussparung ausbildet, in die ein Kragen 24 eines aus Kunststoff gefertigten Anschlagkörpers 20 eingreifen kann. Eine Stufe 18 zur axialen Sicherung des Kragens 24 kann von einem Sprengring gebildet sein.

Der Kragen 24 ist materialeinheitlicher Bestandteil des Anschlagkörpers 20, der auf seiner vom Kragen 24 wegweisenden Seite eine Anschlagfläche 21 ausbildet. Die Anschlagfläche 21 besitzt eine Ringform und erstreckt sich in einer Ebene, die senkrecht zur Drehachse A verläuft. Der Werkzeugkopf 3 besitzt einen Arbeitsabschnitt 8. Der Arbeitsabschnitt 8 wird von einem Axialabschnitt ausgebildet, in den die Schneidkante 4 eine Senkung erzeugen kann. Die Eintauchtiefe der Schneidkante 4 bzw. des Werkzeugkopfes 3 in ein Werkstück kann durch die axiale Lage der Anschlagfläche 21 begrenzt werden. Einhergehend damit lässt sich die mit dem Senkkopf erzeugte Öffnungsweite der Senkung einstellen.

Zur Fixierung der Axiallage des Tiefenbegrenzers 12 gegenüber dem Werkzeugkopf 3 sind Fesselungselemente vorgesehen. Die erfindungsgemäßen Fesselungselemente bestehen aus einer Vielzahl von Positionieraussparungen 10, die im Zylinderabschnitt 7 angeordnet sind. Die Positionieraussparungen 10 sind voneinander sowohl in Umfangsrichtung des Zylinderabschnitts 7, als auch in Axialrichtung bezogen auf die Achse A voneinander beabstandet. Die Gesamtzahl der Positionieraussparungen 10 liegt auf einer als gestrichelte Linie dargestellten Wendelganglinie 9.

Die Positionieraussparungen können einen spitz zulaufenden, trichterförmig bzw. kegelförmig, konisch oder kegelstumpfförmig gestalteten Boden aufweisen. Der Boden kann aber auch kalottenartig ausgebildet sein. Es ist eine Spitze 15 vorgesehen, die ortsfest dem Fesselungskörper 13 zugeordnet ist. Beim Ausführungsbeispiel wird die Spitze von einer Madenschraube 14 ausgebildet, die mit ihrem Außengewindeschaft in eine radiale Gewindebohrung 19 des Fesselungskörpers 13 eingedreht ist. Die Spitze kann eine Rundung, beispielsweise ein Kugelflächenabschnitt sein. Beim Ausführungsbeispiel ist die Spitze kegelförmig bzw. kegelstumpfförmig und der Boden der Positionieraussparung konisch. Der Kegelwinkel und der Winkel des Konus sind gleichgestaltet, so dass die Fläche der Spitze flächig an der Fläche des Bodens der Positionieraussparung anliegt. Durch Angriff eines Werkzeuges an einer Schraubwerkzeugeingriffsöffnung 16 kann die die Spitze 15 aufweisende Madenschraube 14 derart gedreht werden, dass sich die Spitze 15 selbstzentrierend am Boden der Positionieraussparung 10 abstützt.

Die Positionieraussparungen 10 haben im Ausführungsbeispiel eine kreisförmige Öffnung mit einem Durchmesser D. Die benachbart zueinander liegenden Positionieraussparungen sind derart in Umfangsrichtung zueinander beabstandet, dass sich zwischen der benachbarten Positionieraussparungen 10 ein Zylindermantelabschnitt des Zylinderabschnittes 7 erstreckt. Die in Umfangsrichtung gemessene Weite dieses Zwischenraums zwischen zwei benachbarten Positionieraussparungen 10 liegt etwa zwischen der Hälfte des Durchmessers einer Positionieraussparung und dem Durchmesser einer Positionieraussparung. Der axiale Abstand zweiter benachbarter Positionieraussparungen beträgt im Ausführungsbeispiel genau einen Millimeter. Bei einem Schneidenwinkel von 45° zur Achse A entspricht dieser Abstand dann einer Änderung des Öffnungsdurchmessers der Senkung um einen Millimeter. Bei einem anderen Schneidenwinkel ist der axiale Abstand zweier benachbarter Positionieraussparungen anders gewählt. Der axiale Abstand zweier benachbarter Positionieraussparungen 10 ist geringer, als der Durchmesser D einer Positionieraussparung oder geringer als der Radius einer Positionieraussparung 10.

Auf der vom Fesselungskörper 13 wegweisenden Seite des Tiefenbegrenzers 12 und insbesondere des Fesselungskörpers 13 weist der Schaft 1 und insbesondere der Zylinderabschnitt 7 eine Vielzahl von Zeichen 11 auf. Die Zeichen 11 sind Ziffern und geben den Öffnungsdurchmesser der Senkung an, die mit dem Senker erzeugt wird, wenn die Madenschraube 14 mit ihrer Spitze 15 in die dem jeweiligen Zeichen 11 zugeordnete Positionieraussparung 10 eingreift.

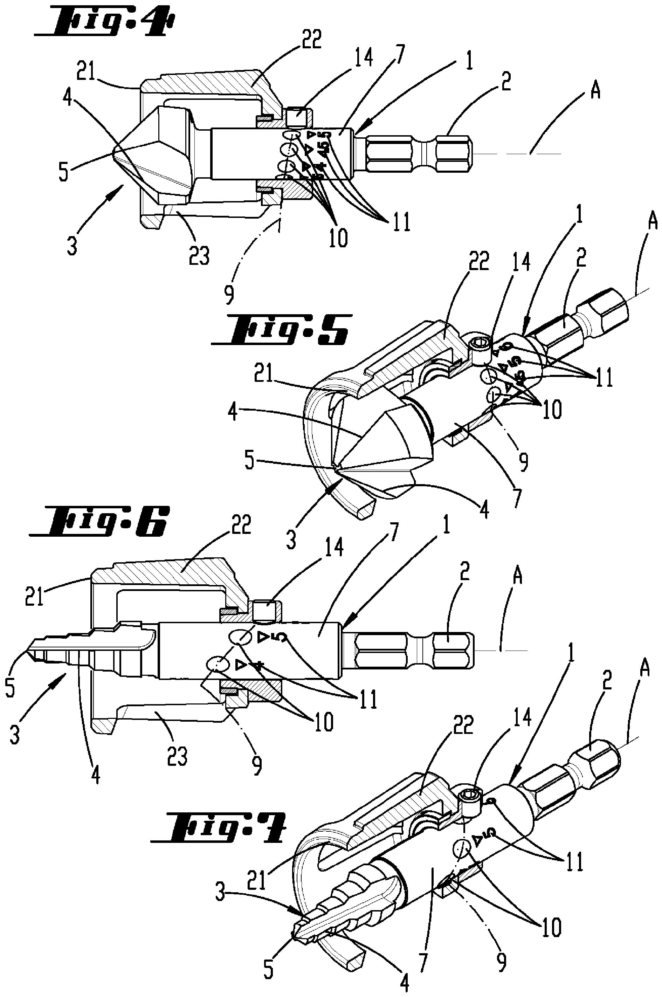

Während das in den Figuren 1 - 3 dargestellte Ausführungsbeispiel einen Werkzeugkopf 3 mit einer einzelnen Schneidkante 4 zeigt, besitzt das in den Figuren 4 und 5 dargestellte zweite Ausführungsbeispiel einen Werkzeugkopf mit einer Vielzahl von Schneidkanten 4.

Das in den Figuren 6 und 7 dargestellte Ausführungsbeispiel ist ein Stufenbohrer. Die Anschlagfläche 21 ist hier so positionierbar, dass eine Senkung erzeugt wird. Der axiale Abstand der Positionieraussparungen 10 ist hier etwas größer als bei den in den Figuren 1 - 5 dargestellten Ausführungsbeispielen. Ist die Spitze des Fesselungselementes 14 in einer Positionieraussparung 10 fixiert, kreuzt die Ebene, in der die Anschlagfläche 21 liegt, eine auf einer Kegelstumpfmantelfläche verlaufenden Abschnitt der gestuften Schneidkante 4 des Werkzeugkopfes 3. Eine Vielzahl von zylinderförmigen Abschnitten des Werkzeugkopfes 3 mit verschiedenen Durchmessern sind jeweils mit kegelstumpfförmigen Abschnitten miteinander verbunden. Die Zeichen 11 können hier den Durchmesser des größten über die Anschlagfläche 21 ragenden Zylinderabschnittes angeben, an den sich der von der Anschlagfläche 21 geschnittene Kegelstumpfabschnitt des Werkzeugkopfes 3 anschließt.

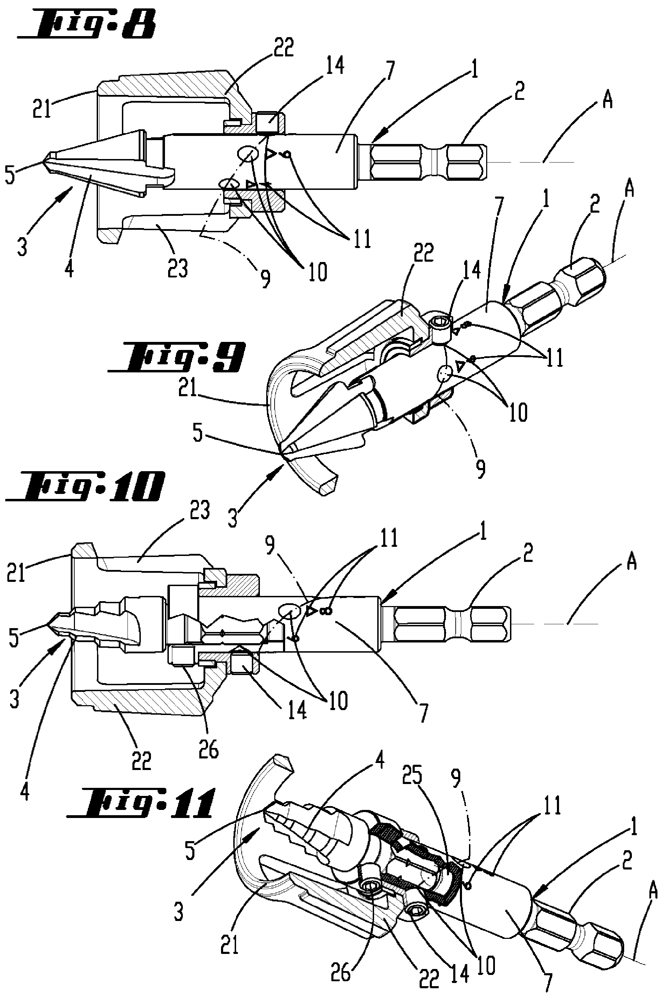

Das in den Figuren 8 und 9 dargestellte Ausführungsbeispiel ist ein Schälbohrer, der ähnlich arbeitet wie der in den Figuren 1 - 5 dargestellte Senker. Der Winkel der Schneidkante 4 zur Achse A ist hier jedoch spitzer.

Das in den Figuren 10 und 11 dargestellte Ausführungsbeispiel entspricht im Wesentlichen dem in den Figuren 6 und 7 dargestellten Ausführungsbeispiel. Hier ist jedoch ein Schaft des Werkzeugkopfes 3 in den Zylinderabschnitt 7 eingesteckt und mit einer Madenschraube 26 gesichert.

Mit diesem Stufenbohrer lassen sich Bohrungen mit unterschiedlichen Durchmessern bohren, wobei die Durchmesser als Zeichen 11 auf dem Schaft 1 bzw. dem Zylinderabschnitt 7 angegeben sind.

Bei einigen Ausführungsbeispielen wird der Schaft 1, der Zylinderabschnitt 7 und der Werkzeugkopf 3 von einem materialeinheitlichen Körper gebildet. Bei anderen Ausführungsbeispielen handelt es sich bei dem Schaft 1, dem Werkzeugkopf 3 und dem Zylinderabschnitt 7 um miteinander verbundene Einzelteile. Bei dem in den Figuren 10 und 11 dargestellten Ausführungsbeispiel kann der Werkzeugkopf 3 durch Lösen der Madenschraube 26 gewechselt werden.

Bei einigen Ausführungsbeispielen wird der Zylinderabschnitt 7 von einer Hülse ausgebildet. In eine Öffnungsseite der Hülse ist der Antriebsabschnitt 2 eingesteckt. In die andere Öffnungsseite der Hülse ist ein Befestigungsabschnitt des Werkzeugkopfes 3 eingesteckt. Die beiden in dem Zylinderabschnitt 7 steckenden Abschnitte des Werkzeugkopfes 3 einerseits und des Antriebsschaftes 2 andererseits sind fest mit dem Zylinderabschnitt 7 verbunden. Es ist ein Magnet 25 vorgesehen, der innerhalb des hülsenförmigen Zylinderabschnittes 7 zwischen den im Zylinderabschnitt 7 steckenden Abschnitten des Werkzeugkopfes 3 und des Antriebsschaftes 2 angeordnet ist. Der Magnet ist auf der axialen Höhe der Positionieraussparungen 10 angeordnet. Das Fesselungselement, im Ausführungsbeispiel die Madenschraube 14 und/oder der Fesselungskörper 13, der das Fesselungselement trägt, sind aus einem ferromagnetischen Werkstoff, so dass der Tiefenbegrenzer 12 bei in Freigabestellung befindlichem Fesselungselement von der Magnetkraft des Magneten 25 vorpositioniert wird. Der Tiefenbegrenzer 12 wird somit von dem Magneten in einer schwimmenden Position vorfixiert, aus der er gegen die magnetische Rückstellkraft sowohl in Richtung des Antriebsschaftes, als auch in Richtung des Werkzeugkopfes 3 axial verlagert werden kann. Aus einer axial verlagerten Stellung gleitet der unfixierte Tiefenbegrenzer 12 selbständig zurück in die Neutralstellung.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein Werkzeug, das dadurch gekennzeichnet ist, dass der Schaft 1 eine Vielzahl von auf einer Wendelganglinie 9 angeordnete Positionieraussparungen 10 aufweist und das Fesselungselement eine Spitze 15 besitzt, die wahlweise in eine der mehreren Positionieraussparungen 10 eingreift.

Ein Werkzeug, das dadurch gekennzeichnet ist, dass das Fesselungselement eine Madenschraube 14 ist.

Ein Werkzeug, das dadurch gekennzeichnet ist, dass der Tiefenbegrenzer 12 eine Hülse ist.

Ein Werkzeug, das dadurch gekennzeichnet ist, dass der Tiefenbegrenzer 12 bei nicht in der Positionieraussparung 10 eingreifender Spitze 15 stufenlos auf dem Schaft 1 verschiebbar ist.

Ein Werkzeug, das dadurch gekennzeichnet ist, dass der axiale Abstand b der Zentren zweier unmittelbar benachbarter Positionieraussparungen 10 geringer ist, als der Durchmesser D der Positionieraussparung 10, wobei insbesondere vorgesehen ist, dass der der axiale Abstand b geringer ist, als der Radius eines kreisrunden Öffnungsrands der Positionieraussparungen 10.

Ein Werkzeug, das dadurch gekennzeichnet ist, dass der Schaft 1 auf axialer Höhe der Positionieraussparungen 10 einen Magneten 25 aufweist, der magnetisch mit dem Fesselungselement und/oder einem das Fesselungselement tragenden Fesselungskörper 13 derart zusammenwirkt, dass der Tiefenbegrenzer 12 gegen eine magnetische Rückstellkraft in beide Achsrichtungen auf dem Schaft 1 verschiebbar ist.

Ein Werkzeug, das dadurch gekennzeichnet ist, dass der Werkzeugkopf 3 eine im Arbeitsabschnitt 8 sowohl eine radiale, als auch eine axiale Richtungskomponente aufweisende Schneide 4 aufweist zum Bohren von Senkungen in die Oberfläche eines Werkstücks, wobei den Positionieraussparungen 10 die Öffnungsweite der Senkungen angebende Zeichen 11 zugeordnet sind.

Ein Werkzeug, das dadurch gekennzeichnet, dass die Zeichen 11 axial auf der vom Werkzeugkopf 3 wegweisenden Seite der zugeordneten Positionieraussparung 10 angeordnet sind.

Ein Werkzeug, das dadurch gekennzeichnet ist, dass der Werkzeugkopf 3 die Funktion eines Senkers, eines Bithalters, eines Bohrers, eines Schälbohrers, eines Stufenbohrers oder eines Lochfräsers ausüben kann und diesbezüglich ausgebildet ist.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Schaft | | |
| 2 | Antriebsschaft | | |
| 3 | Werkzeugkopf | | |
| 4 | Schneidkante | A | Achse/ Drehachse |
| 5 | Spitze | D | Durchmesser |
| 6 | durchmessergrößter Abschnitt | | |
| 7 | Zylinderabschnitt | b | axialer Abstand |
| 8 | Arbeitsabschnitt | | |
| 9 | Wendelganglinie | | |
| 10 | Positionieraussparung | | |
| 11 | Zeichen | | |
| 12 | Tiefenbegrenzer | | |
| 13 | Fesselungskörper | | |
| 14 | Madenschraube | | |
| 15 | Spitze | | |
| 16 | Schraubwerkzeugeingriffsöffnung | | |
| 17 | Hals | | |
| 18 | Stufe | | |
| 19 | Gewindebohrung | | |
| 20 | Anschlagkörper | | |
| 21 | Anschlagfläche | | |
| 22 | Steg | | |
| 23 | Fenster | | |
| 24 | Kragen | | |
| 25 | Magnet | | |
| 26 | Madenschraube | | |

## Patentansprüche

1. Werkzeug mit einem um eine Drehachse (A) antreibbaren Schaft (1) und einem damit verbundenen drehend arbeitenden Werkzeugkopf (3), der einen sich über einen Axialabstand erstreckenden Arbeitsabschnitt (8) aufweist, wobei ein am Schaft (1) in verschiedenen Axialstellungen mittels eines radial verlagerbaren Fesselungselementes festlegbarer Tiefenbegrenzer (12) eine in den Axialstellungen im Arbeitsabschnitt (8) liegende Anschlagfläche (21) aufweist, wobei der Schaft (1) eine Vielzahl von auf einer Wendelganglinie (9) angeordnete Positionieraussparungen (10) aufweist und das Fesselungselement eine Spitze (15) besitzt, die wahlweise in eine der mehreren Positionieraussparungen (10) eingreift, **dadurch gekennzeichnet, dass** die Positionieraussparungen (10) auf einen Zylinderabschnitt (7) des Schaftes (1) angeordnet sind, wobei der axiale Abstand (b) der Zentren zweier unmittelbar benachbarter Positionieraussparungen (10) geringer ist, als der Durchmesser (D) der Positionieraussparung (10).

2. Werkzeug nach Anspruch 1, **dadurch gekennzeichnet, dass** das Fesselungselement eine Madenschraube (14) ist.

3. Werkzeug nach einem der vorhergehenden Ansprüche, **dadurch gekennzeichnet, dass** der Tiefenbegrenzer (12) eine Hülse ist.

4. Werkzeug nach einem der vorhergehenden Ansprüche, **dadurch gekennzeichnet, dass** der Tiefenbegrenzer (12) bei nicht in der Positionieraussparung (10) eingreifender Spitze (15) stufenlos auf dem Schaft (1) verschiebar ist.

5. Werkzeug nach Anspruch 1, **dadurch gekennzeichnet, dass** der der axiale Abstand (b) geringer ist, als der Radius eines kreisrunden Öffnungsrands der Positionieraussparungen (10).

6. Werkzeug nach einem der vorhergehenden Ansprüche, **dadurch gekennzeichnet, dass** der Schaft (1) auf axialer Höhe der Positionieraussparungen (10) einen Magneten (25) aufweist, der magnetisch mit dem Fesselungselement und/oder einem das Fesselungselement tragenden Fesselungskörper (13) derart zusammenwirkt, dass der Tiefenbegrenzer (12) gegen eine magnetische Rückstellkraft in beide Achsrichtungen auf dem Schaft (1) verschiebbar ist.

7. Werkzeug nach einem der vorhergehenden Ansprüche, **dadurch gekennzeichnet, dass** der Werkzeugkopf (3) eine im Arbeitsabschnitt (8) sowohl eine radiale, als auch eine axiale Richtungskomponente aufweisende Schneide (4) aufweist zum Bohren von Senkungen in die Oberfläche eines Werkstücks, wobei den Positionieraussparungen (10) die Öffnungsweite der Senkungen angebende Zeichen (11) zugeordnet sind.

8. Werkzeug nach Anspruch 7, **dadurch gekennzeichnet, dass** die Zeichen (11) axial auf der vom Werkzeugkopf (3) wegweisenden Seite der zugeordneten Positionieraussparung (10) angeordnet sind.

9. Werkzeug nach einem der vorhergehenden Ansprüche, **dadurch gekennzeichnet, dass** der Werkzeugkopf (3) die Funktion eines Senkers, eines Bithalters, eines Bohrers, eines Schälbohrers, eines Stufenbohrers oder eines Lochfräsers ausüben kann und diesbezüglich ausgebildet ist.

## Claims

1. Tool having a shaft (1) which can be rotationally driven about an axis of rotation (A), a tool head (3) which is connected thereto and operates in rotation and which has a working section (8) extending over an axial distance, wherein a depth limiter (12) can be fixed by a radially fixable restraining element in various axial positions on the shaft (1), wherein the depth limiter (12) comprises a stop surface (21) located in the working section (8) in the axial positions, wherein the shaft (1) comprises a plurality of positioning recesses (10) arranged on a helical path (9) and wherein the restraining element has a tip (15) which selectively engages in one of the plurality of positioning recesses (10), **characterised in that** the positioning recesses (10) are arranged on a cylindrical section (7) of the shaft (1), the axial distance (b) between the centres of two directly adjacent positioning recesses (10) being less than the diameter (D) of the positioning recess (10).

2. Tool according to claim 1, **characterised in that** the restraining element is a grub screw (14).

3. Tool according to one of the preceding claims, **characterised in that** the depth limiter (12) is a sleeve.

4. Tool according to one of the preceding claims, **characterised in that** the depth limiter (12) is displaceable continuously on the shaft (1) when the tip (15) does not engage in the positioning recess (10).

5. Tool according to claim 1, **characterised in that** the axial distance (b) is less than the radius of a circular opening edge of the positioning recesses (10).

6. Tool according to one of the preceding claims, **characterised in that** the shaft (1) has a magnet (25) at the axial height of the positioning recesses (10), which magnetically interacts with the restraining element and/or a restraining body (13) carrying the restraining element in such a way that the depth limiter (12) can be displaced on the shaft (1) in both axial directions against a magnetic restoring force.

7. Tool according to one of the preceding claims, **characterised in that** the tool head (3) has a cutting edge (4) having both a radial and an axial directional component in the working section (8) for drilling countersinks in the surface of a workpiece, wherein marks (11) indicating the opening width of the countersinks are assigned to the positioning recesses (10).

8. Tool according to claim 7, **characterised in that** the marks (11) are arranged axially on the side of the associated positioning recess (10) pointing away from the tool head (3).

9. Tool according to one of the preceding claims, **characterised in that** the tool head (3) can perform the function of a countersink, a bit holder, a drill, a peeling drill, a step drill or a hole cutter and is designed accordingly.

## Revendications

1. Outil, pourvu d'une tige (1) susceptible d'être entraînée autour d'un axe de rotation (A) et d'une tête d'outil (3) travaillant en rotation, assemblée avec celle-ci, qui comporte une partie de travail (8) s'étendant sur un écart axial, un limiteur de profondeur (12) immobilisable sur la tige (1) dans différentes positions axiales au moyen d'un élément d'attache déplaçable en direction radiale comportant une surface de butée (21) située dans la partie de travail (8) dans les positions axiales, la tige (1) comportant une pluralité d'encoches (10) de positionnement placées sur une ligne hélicoïdale (9) et l'élément d'attache détenant une pointe (15), qui s'engage sélectivement dans une des plusieurs encoches (10) de positionnement, **caractérisé en ce que** les encoches (10) de positionnement sont placées sur une partie cylindrique (7) de la tige (1), l'écart axial (b) entre les centres de deux encoches (10) de positionnement directement voisines étant inférieur au diamètre (D) de l'encoche de positionnement (10).

2. Outil selon la revendication 1, **caractérisé en ce que** l'élément d'attache est une vis sans tête (14).

3. Outil selon l'une quelconque des revendications précédentes, **caractérisé en ce que** le limiteur de profondeur (12) est une douille.

4. Outil selon l'une quelconque des revendications précédentes, **caractérisé en ce que** lorsque la pointe (15) ne s'engage pas dans l'encoche de positionnement (10), le limiteur de profondeur (12) est déplaçable en continu sur la tige (1).

5. Outil selon la revendication 1, **caractérisé en ce que** l'écart axial (b) est inférieur au rayon d'un bord d'ouverture des encoches de positionnement (10).

6. Outil selon l'une quelconque des revendications précédentes, **caractérisé en ce qu'**à hauteur axiale des encoches (10) de positionnement, la tige (1) comporte un aimant (25) qui interagit magnétiquement avec l'élément d'attache et / ou avec un corps d'attache (13) portant l'élément d'attache, de telle sorte que le limiteur de profondeur (12) soit déplaçable sur la tige (1) dans les deux directions d'axe, à l'encontre d'une force de rappel magnétique.

7. Outil selon l'une quelconque des revendications précédentes, **caractérisé en ce que** la tête d'outil (3) comporte un tranchant (4) comportant dans la partie de travail (8) aussi bien une composante directionnelle radiale qu'également une composante directionnelle axiale, pour percer des abaissements dans la surface d'une pièce à usiner, aux encoches (10) de positionnement étant associés les symboles indiquant la largeur d'ouverture des abaissements (11).

8. Outil selon la revendication 7, **caractérisé en ce que** les symboles (11) sont placés en direction axiale sur le côté s'éloignant de la tête d'outil (3) de l'encoche de positionnement (10) associée.

9. Outil selon l'une quelconque des revendications précédentes, **caractérisé en ce que** la tête d'outil (3) est susceptible d'exercer la fonction d'une fraise conique, d'un porte-embout, d'un foret, d'un foret à peler, d'un foret étagé ou d'une fraise à trou et est conçue en conséquence.
